# FASCICULE DE BREVET EUROPEEN

(11) **EP 1 731 726 B1**
(45) Date de publication et mention de la délivrance du brevet: **05.01.2011**
(21) Numéro de dépôt: 06290929.6
(22) Date de dépôt: 07.06.2006
(51) Int. Cl.: F01M 11/03, F01M 1/10, B01D 27/02, B01D 35/00

(54) **Système de filtration d'huile de lubrification d'un moteur**
Ölfilter für Brennkraftmaschine
Oil filter for combustion engine

(30) Priorité: 08.06.2005 FR 0505830
(43) Date de publication de la demande: 13.12.2006
(73) Titulaire: Peugeot Citroën Automobiles SA, 78140 Vélizy-Villacoublay (FR)
(72) Inventeur: Crehan, Gabriel, 75018 Paris (FR); Crepeau, Gérald, 92700 Colombes (FR)
(74) Mandataire: Ménès, Catherine

(56) Documents cités:
- DE-A- 10 318 784
- DE-A- 19 724 172
- US-A- 2 549 698
- US-A- 4 620 917
- US-A- 5 932 108
- PATENT ABSTRACTS OF JAPAN vol. 015, no. 385 (C-0871), 27 septembre 1991 (1991-09-27) & JP 03 157112 A (TOKYO ROKI KK), 5 juillet 1991 (1991-07-05)

## Description

La présente invention concerne un système de réduction de la quantité de particules solides submicroniques, notamment de particules de suie, dans l'huile de lubrification d'un moteur de véhicule automobile.

La longévité d'un moteur dépend en grande partie de la qualité de sa lubrification. Cette qualité de lubrification requiert une bonne filtration de l'huile, en épurant constamment les :
particules métalliques (limaille) produites par l'usure des pièces.
scories de combustion (résidus charbonneux - calamine).
produits d'oxydation des huiles (condensation, hydrocarbure etc..).
poussières extérieures entrant dans le moteur ; et
boues issues de la décomposition des huiles.

La principale catégorie de particules est constituée par les scories de combustion, aussi désignées comme particules de suie, qui sont essentiellement formées de carbone. Ces particules sont de taille nanométrique, et sont donc aussi appelées particules submicroniques ou nano particules. Elles sont dures et abrasives. Elles forment généralement ensuite par agglomération des particules de taille plus importante. Les interstices de ces agglomérats peuvent éventuellement contenir d'autres composés, notamment des composés organiques. Une fois qu'ils ont atteint une certaine taille, les agglomérats tendent à sédimenter, notamment au fond du bac à huile.

La présence de quantités importantes de suie dans l'huile est gênante car elle altère ses propriétés chimiques et physiques. Sa présence entraîne alors des températures de fonctionnement plus élevées et une usure accélérée du moteur.

La sophistication croissante des nouvelles motorisations augmente la production de particules.

Ainsi, la technologie "*Exhaust Gas Recirculation*" (EGR), qui recycle une partie du gaz d'échappement vers la chambre de combustion afin de réduire des émissions de NOx, peut entraîner une augmentation de la quantité de suie formée, et ainsi une augmentation de la quantité de particules présente dans l'huile.

D'autre part, les développements récents tendent à réduire le niveau de tolérance vis-à-vis des particules.

Ainsi, la technologie de "*Common Rail*" implique le maintien d'un niveau adéquat de pression huile. Ces moteurs sont particulièrement sensibles à la présence de particules.

Au vu de ces avancements et afin de prolonger la durée de vie du moteur, il est donc recherché d'augmenter la qualité de filtration de l'huile.

Les systèmes actuels de filtration d'huile pour des moteurs de véhicule se composent d'un élément filtrant, aussi appelé un « *filtre à huile* » traversé par la totalité de l'écoulement de l'huile. Ce filtre est conçu pour ne pas limiter l'écoulement d'huile maintenant un bas différentiel de pression à travers le filtre. C'est pourquoi le filtre présente une maille très large qui ne retient que les particules de taille supérieure à 5 à 10 microns. En outre, la plupart des filtres sont équipés d'un clapet de dérivation. Lorsque ces filtres se colmatent, le clapet de dérivation s'ouvre et distribue l'huile non filtrée dans le moteur, ce qui entraîne une usure accélérée du moteur.

Or il a été constaté qu'environ 95 % des particules solides suspendues dans l'huile non filtrée, totalisant 1 à 4 % de la masse d'huile à la fin de l'intervalle de vidange ont une taille inférieure à 5 microns.

Il est rappelé que la taille des nano particules de suie est de 1 à 30 nano mètres. Ces nano particules peuvent s'aggréger pour former des « suies » à 50 micromètres de diamètre.

Les véhicules diesel qui sont équipés avec la technologie « *Common Rail* » sont équipés d'un filtre à particules » (FAP). Les FAP ont pour but de piéger la suie avant qu'elle ne s'échappe dans l'atmosphère via les gaz d'échappement puis d'en assurer la combustion. Pour faciliter la combustion, on ajoute des additifs catalytiques dans le carburant. Cependant, ces additifs collent sur les nano particules de suie lorsqu'elles sont formées dans la chambre de combustion, et augmentent leur caractère abrasif.

Dans US 2549698 est décrit un filtre pour huile de lubrification composé d'un récipient renfermant une masse compacte de granules de papier chiffonné présentant un diamètre d'au moins ¼ de pouce (0,635 cm), le chiffonnage étant réalisé de sorte que la surface des granulés présente des reliefs constitués de plis et d'interstices entre les plis, les particules de suie étant adsorbées par ladite surface.

Le but de l'invention est de proposer un système de filtration des huiles de lubrification permettant d'éliminer les particules solides de diamètre inférieur à 5 microns.

Ce but est atteint par un système de filtration d'huile comportant un piège pour particules submicroniques.

En effet, les pièges pour particules submicroniques permettent d'éliminer les particules de petite taille de l'huile sans affecter le différentiel de pression. Les pièges comprennent généralement un matériau poreux. Les particules présentant une taille et forme proche de celle des pores de ces pièges sont soumises à des forces d'attraction de type van der Waals permettant de les piéger.

L'invention a donc pour objet un système de filtration d'huile de lubrification d'un moteur de véhicule automobile comportant un filtre à huile, comportait au moins un piège pour particules submicroniques, est caractérisé en ce que ledit piège pour particules est de type particulaire de forme sphérique ou arrondie, présentant un diamètre de 1 à 20 mm, en ce qu'il est constitué en tout ou partie d'un matériau poreux dont la taille de pores diminue progressivement de la surface vers le centre, matériau choisi parmi les métaux, oxydes métalliques, polymères organiques ou inorganiques, céramiques, verres, graphites ou l'une de leurs combinaisons et en ce que ledit piège fonctionnement par adsorption, les particules submicroniques venant se loger dans lesdits pores.

Selon le procédé de fabrication utilisé, le piège pour particules submicroniques est constitué en tout ou partie d'un matériau poreux. Ce matériau poreux est choisi parmi les métaux, oxydes métalliques, polymères organiques ou inorganiques, céramiques, verres, graphites ou l'une de leurs combinaisons.

Le piège pour particules est particulaire, et de forme arrondie ou sphérique avec un diamètre préférentiellement de 1 à 20 mm.

La taille des particules solides adsorbées par le piège pour particules dépend essentiellement de la taille de pores du piège pour particules. Afin de piéger les particules solides les plus gênantes, à savoir celles présentant un diamètre inférieur à 5 microns. Egalement, le piège pour particules présente, de préférence, un diamètre des pores inférieur à 5 microns.

Avantageusement, le piège pour particules peut être traité sur sa surface pour modifier sa polarité.

L'invention sera mieux comprise à la lecture de la description détaillée qui va suivre.

Les pièges pour particules submicroniques sont de préférence placés dans un boîtier après le filtre à huile. Avantageusement, les pièges pour particules sont en contact ou suspendus dans l'huile de lubrification, et peuvent donc circuler. De ce fait, le piège pour particules peut fonctionner indépendamment du système classique de filtration en continu ou d'un système de filtration auxiliaire.

Cette caractéristique présente deux avantages. D'une part, elle permet de s'affranchir des problèmes de différentiel de pression lors de la filtration. D'autre part, les pièges pour particules exercent en circulant une action de frottement contre les parois. Cette action de frottement permet de déloger des dépôts, par exemple les gommes d'hydrocarbures polymérisés, par exemple du bac à huile, et de remettre en suspension les boues sédimentées.

Le matériau poreux est inerte vis-à-vis de l'huile et robuste au frittage. Les pièges submicroniques peuvent être notamment obtenus à partir de métaux, oxydes métalliques, polymères organiques ou inorganiques, céramiques, verres, graphites ou l'une de leur combinaison.

Les pièges pour particules présentent de préférence une forme sphérique ou arrondie. Cette forme est préférée car elle assure une surface élevée et une diminution de la perte de charge à travers le filtre à huile classique. En outre, une forme sphérique assure une adsorption rapide des particules submicronique tout en limitant la fragmentation et le frottement entre pièges.

La surface externe des pièges pour particules peut être traitée de manière connue en soi pour modifier son affinité chimique ou sa réactivité. En particulier, il peut être avantageux de traiter la surface de certains matériaux hydrophiles pour les rendre plus hydrophobe afin d'améliorer le mouillage des pièges pour particules par l'huile.

Lors de la vidange, ces pièges peuvent être chargés via les filtres à huiles ou le compartiment où ils résident.

Les pièges pour particules peuvent intégrer un élément magnétique pour mieux piéger les particules ferromagnétiques dans l'huile. Dans certains cas, l'élément magnétique permettra d'attacher certains pièges pour particules contre la paroi métallique du moteur ou du circuit de l'huile pour empêcher leur libre circulation.

Par voie de conséquence, les pièges pour particules sont de préférence dimensionnés de manière à ne pas bloquer les passages par lesquels l'huile circule, notamment l'entrée et la sortie du compartiment de stockage. D'autre part, la distribution poreuse de ces pièges est choisie suffisamment grande pour permettre une diffusion optimale des particules solides adsorbées.

Aussi, sont généralement appropriées des pièges présentant un diamètre de 1 à 20 mm, de préférence de 3 à 7 mm, et tout particulièrement de 4 à 6 mm.

Afin de pouvoir adsorber les particules solides d'un diamètre inférieur à 5 micromètres, les pores du matériau sont de taille supérieure. Cependant, les forces d'attraction entre les particules et les pièges pour particules sont maximales lorsque les dimensions sont similaires. Ainsi, le diamètre moyen des pores des billes poreuses est choisi généralement dans la plage de 0,1 à 10, de préférence 0,5 à 5 microns.

La taille des pores du matériau peut présenter une distribution large ou au contraire étroite. Cependant, les matériaux poreux avec une taille de pores variable sont préférées car ils permettent de mieux s'adapter à des particules de toutes tailles et formes.

Selon l'invention, sont des matériaux poreux dont la taille de pores diminue progressivement de la surface vers le centre sont utilisés. En effet, ce type de porosité facilite l'accumulation des particules solides au centre des billes et présente ainsi un volume poreux efficace maximal. Il réduit en outre le risque de bouchage des pores par les particules des dépôts de gomme présents par exemple au fond du réservoir d'huile.

La quantité de pièges pour particules à prévoir peut varier largement, et dépend essentiellement de leur porosité.

En supposant un moteur contenant 3 litres d'huile moteur, laquelle contient environ 4 % en poids de particules solides qui ne peuvent pas être filtré par un système de filtration conventionnel, le volume de pièges pour particules submicronique serait d'environ 12 cm³ (0.12L), en négligeant l'effet de densité.

En fonction de différents diamètres des pièges pour particules, il est indiqué dans le tableau 1 le nombre de billes nécessaire pour atteindre ce volume. Le nombre de billes poreuses résulte alors d'une multiplication avec la porosité de celles-ci. Les valeurs obtenues pour une porosité de 50 et 60 % sont portées dans le tableau 1 ci-dessous.

**Tableau 1 :**

| Diamètre du Bille (cm) | Volume Total d'une bille solide (cm³) | Nombre des Billes Solides = 12 cm³ | Nombre des Billes à 50 % Porosité avec 12cm³ libre | Nombre des Billes à 60 % Porosité avec 12cm³ libre |
|---|---|---|---|---|
| 0.25 | 0.004 | 1500 | 3000 | 2500 |
| 0.5 | 0.03 | 180 | 370 | 300 |

Avantageusement, les pièges pour particules circulent dans leur compartiment et permettent aux particules solides submicroniques de s'y adsorber par physisorption.

Les particules adsorbées se trouvent alors un équilibre avec la phase liquide d'huile. Elles réduiront toutefois au minimum leur énergie propre en se logeant dans l'espace à l'intérieur des confinements les plus proches en taille de leurs propres dimensions physiques.

En effet, les forces d'attraction agissant entre les particules et la surface du matériau poreux sont les forces électrostatiques de Van der Waals. Plus la taille et la forme des pores approchent les dimensions des particules, plus fortement les particules sont maintenues à l'intérieur des billes. Cet effet est également appelé l'"*Effet de Confinement*"*.*

Comme les particules tendent à migrer vers l'intérieur du matériau poreux, la surface reste disponible pour l'adsorption d'autres particules.

Les pièges pour particules submicroniques peuvent être introduits et placés à tout endroit du circuit d'huile. Selon un mode de réalisation, ils sont placés dans le filtre à huile. Ils peuvent alors être remplacés au moment de la vidange d'huile de lubrification.

Eventuellement, les pièges pour particules peuvent être maintenus dans le bac de réservoir d'huile par un moyen adapté, par exemple une barrière de maille placée dans le tuyau qui alimente l'huile aux systèmes de filtration avant que l'huile ne circule vers les pièces mobiles du moteur.

Les pièges pour particules dans le système décrit peuvent être des pièges nouveaux ou recyclés. Le recyclage peut notamment être réalisé par un nettoyage adapté, par exemple par ultrasons.

Le système de filtration décrit n'est pas spécifique à un type de moteur et peut donc être installé dans un moteur à essence ou un moteur Diesel. Cependant, le système décrit est particulièrement utile dans un moteur Diesel de type « Common Rail ». Le moteur peut par ailleurs être équipé de moyens de dépollution, notamment des gaz NOx, par exemple de type « *Exhaust Gas Recirculation* ».

Le système de filtration est par ailleurs compatible avec d'autres moyens de séparation de composés organiques ou organométalliques, et en particulier des moyens de séparation sélectifs de composés issus du gazole.

Bien entendu, d'autres modes de réalisation encore de ces pièges à particules décrits peuvent être envisagés.

Par ailleurs, le système de filtration n'interfère pas avec le fonctionnement du moteur et ne nécessite donc pas de modification de l'architecture du moteur. Par ailleurs, la composition de l'huile de lubrification n'est pas altérée, notamment en ce qui concerne les additifs.

Le système décrit permet donc la filtration des particules solides submicroniques de l'huile de lubrification sans altérer le fonctionnement du moteur. Il présente par ailleurs les avantages suivants :
prolongation des caractéristiques lubrifiantes de l'huile ; -
prolongation de la capacité de filtration du circuit lubrifiant ;
prolongation de la vie du moteur en diminuant l'usure des pièces mobiles par les particules ;
facilité d'intégration ;
pas d'augmentation de la contre pression huile ;
solution économique avec des matériaux peu coûteux ;
versatilité en termes de type de moteur ; et
versatilité en termes de types d'huile.

## Revendications

1. Système de réduction de la quantité de particules solides submicroniques contenues dans l'huile de lubrification d'un moteur de véhicule automobile comportant au moins un piège pour particules submicroniques dans lequed ledit piège pour particules est de type particulaire de forme sphérique ou arrondie, présentant un diamètre de 1 à 20 mm, **caractérisé en ce qu'**il est constitué en tout ou partie d'un matériau poreux dont la taille de pores diminue progressivement de la surface vers le centre, matériau choisi parmi les métaux, oxydes métalliques, polymères organiques ou inorganiques, céramiques, verres, graphites ou l'une de leurs combinaisons et **en ce que** ledit piège fonctionnement par adsorption, les particules submicroniques venant se loger dans lesdits pores.

2. Système selon la revendication 1, **caractérisé en ce qu'**il comporte un boîtier à l'intérieur duquel est disposée une pluralité de pièges pour particules submicroniques.

3. Système selon la revendication 1, **caractérisé en ce que** le piège pour particules est maintenu dans le bac de réservoir d'huile par un moyen adapté.

4. Système selon la revendication 2, **caractérisé en ce que** ledit boîtier est disposé après le filtre à huile.

5. Système selon l'une quelconque des revendications précédentes, **caractérisé en ce que** le piège pour particules présente un diamètre moyen de pores inférieur a 10 microns.

6. Système selon l'une quelconque des revendications précédentes, **caractérisé en ce que** le piège pour particules est traité sur sa surface pour modifier sa polarité.

7. Système selon l'une quelconque des revendications précédentes, **caractérisé en ce que** le piège pour particules intègre des éléments magnétiques.

8. Système selon l'une quelconque des revendications précédentes, **caractérisé en ce que** les pièges pour particules peuvent être recyclés.

## Claims

1. System for reducing the quantity of solid sub-micronic particles contained in the lubricating oil of motor vehicle engine comprising at least one trap for sub-micronic particles, in which the said trap for particles is of the particulate type of spherical or rounded shape, having a diameter of 1 to 20 mm, **characterized in that** it is constituted in whole or in part by a porous material, the pore size of which reduces progressively from the surface towards the centre, the material being selected from the metals, metallic oxides, organic or inorganic polymers, ceramics, glasses, graphites or one of the combinations thereof and **in that** the said trap has a functioning by adsorption, the sub-micronic particles coming to be accommodated in the said pores.

2. System according to Claim 1, **characterized in that** it comprises a casing, in the interior of which there is disposed a plurality of traps for sub-micronic particles.

3. System according to Claim 1, **characterized in that** the trap for particles is held in the oil tank by a suitable means.

4. System according to Claim 2, **characterized in that** the said casing is arranged after the oil filter.

5. System according to any one of the preceding claims, **characterized in that** the trap for particles has an average pore diameter of less than 10 microns.

6. System according to any one of the preceding claims, **characterized in that** the trap for particles is treated on its surface to modify its polarity.

7. System according to any one of the preceding claims, **characterized in that** the trap for particles integrates magnetic elements.

8. System according to any one of the preceding claims, **characterized in that** the traps for particles can be recycled.

## Patentansprüche

1. System zum Verringern der Menge Submikrometer-Feststoffpartikel, die in dem Schmieröl eines Kraftfahrzeugmotors enthalten sind, das mindestens eine Falle für Submikrometer-Partikel aufweist, bei dem die Partikelfalle des Typs Partikel mit Kugelform oder gerundeter Form ist, die einen Durchmesser von 1 bis 20 mm aufweisen, **dadurch gekennzeichnet, dass** es ganz oder zum Teil aus einem porigen Werkstoff besteht, dessen Porengröße allmählich von der Oberfläche zur Mitte hin abnimmt, wobei der Werkstoff aus den Metallen, Metalloxiden, organischen oder anorganischen Polymeren, Keramiken, Gläsern, Graphiken oder einer ihrer Kombinationen ausgewählt wird, und dass die Falle durch Adsorption funktioniert, wobei sich die Submikrometer-Partikel in die Poren fügen.

2. System nach Anspruch 1, **dadurch gekennzeichnet, dass** es ein Gehäuse aufweist, in dessen Innerem mehrere Fallen für Submikrometer-Partikel angeordnet sind.

3. System nach Anspruch 1, **dadurch gekennzeichnet, dass** die Partikelfalle in dem Öltankbehälter durch ein geeignetes Mittel gehalten wird.

4. System nach Anspruch 2, **dadurch gekennzeichnet, dass** das Gehäuse nach dem Ölfilter angeordnet ist.

5. System nach einem der vorhergehenden Ansprüche, **dadurch gekennzeichnet, dass** die Partikelfalle einen mittleren Porendurchmesser kleiner als 10 Mikrometer aufweist.

6. System nach einem der vorhergehenden Ansprüche, **dadurch gekennzeichnet, dass** die Partikelfalle auf ihrer Oberfläche behandelt ist, um ihre Polung zu ändern.

7. System nach einem der vorhergehenden Ansprüche, **dadurch gekennzeichnet, dass** die Partikelfalle magnetische Elemente enthält.

8. System nach einem der vorhergehenden Ansprüche, **dadurch gekennzeichnet, dass** die Partikelfallen recyclingfähig sind.
